(19) Europäisches Patentamt
European Patent Office
Office européen des brevets

(11) **EP 2 320 558 B1**

(12) **EUROPÄISCHE PATENTSCHRIFT**

(45) Veröffentlichungstag und Bekanntmachung des Hinweises auf die Patenterteilung:
**15.07.2015 Patentblatt 2015/29**

(51) Int Cl.:
*H02P 9/00* *(2006.01)*   *H02P 9/10* *(2006.01)*
*F03D 9/00* *(2006.01)*   *H02P 21/14* *(2006.01)*
*H02P 23/14* *(2006.01)*   *F03D 7/02* *(2006.01)*

(21) Anmeldenummer: **10185259.8**

(22) Anmeldetag: **01.10.2010**

(54) **Elektrische Schaltung zur Erzeugung elektrischer Energie**

Electrical circuit for generating electrical energy

Circuit électrique pour la production d'énergie électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2009 DE 102009052632**

(43) Veröffentlichungstag der Anmeldung:
**11.05.2011 Patentblatt 2011/19**

(73) Patentinhaber: **GE Energy Power Conversion Technology Limited
Rugby
Warwickshire CV21 1BU (GB)**

(72) Erfinder:
• **Niesel, Norbert
  13359 BERLIN (DE)**
• **Kreher, Jochen
  10435 BERLIN (DE)**
• **Neitzel, Thomas
  10369 BERLIN (DE)**
• **Kasztelan, Thomas
  12107 BERLIN (DE)**

(74) Vertreter: **Serjeants LLP
Dock
75 Exploration Drive
Leicester, LE4 5NU (GB)**

(56) Entgegenhaltungen:
EP-A2- 0 704 709   WO-A1-2008/064472
KR-A- 20030 077 354   US-A1- 2004 019 439
US-A1- 2007 278 797   US-A1- 2009 206 606

**Beschreibung**

Die Erfindung betrifft ein Verfahren zum Betreiben einer elektrischen Schaltung zur Erzeugung elektrischer Energie, bei der ein Asynchrongenerator einen Stator und einen Rotor aufweist, bei der der Asynchrongenerator statorseitig mit einem Energieversorgungsnetz gekoppelt ist, und bei dem der zum Rotor des Asynchrongenerators fließende Rotorstrom gemessen wird. Die Erfindung betrifft ebenfalls eine entsprechende elektrische Schaltung zur Erzeugung elektrischer Energie sowie ein Steuergerät für eine entsprechende Schaltung.

Ein derartiges Verfahren sowie eine derartige elektrische Schaltung sind beispielsweise aus der DE 10 2007 014 728 A1 bekannt. Dort wird der zum Stator fließende Statorstrom und der zum Rotor fließende Rotorstrom mit Hilfe von Sensoren gemessen und dann bei der Steuerung und/oder Regelung der Schaltung berücksichtigt.

Bei einem Fehler im Energieversorgungsnetz, insbesondere bei einem Einbruch der Netzspannung, kann die Messung des Statorstroms ungenau oder gar fehlerhaft sein. Die Steuerung und/oder Regelung der Schaltung kann damit zu erheblichen Regelfehlern führen und kann deshalb gegebenenfalls nicht mehr auf der Grundlage des Statorstroms fortgesetzt werden.

Aufgabe der Erfindung ist es, ein Verfahren der eingangs genannten Art zu schaffen, mit dem auch bei einem Fehler des Energieversorgungsnetzes ein weitgehend korrekter Statorstrom zur Verfügung steht.

Die Erfindung löst diese Aufgabe durch ein Verfahren nach dem Anspruch 1. Der Oberbegriff von Anspruch 1 ist aus US 2009/206606 A1 ableitbar.

Erfindungsgemäß wird bei einem Verfahren der eingangs genannten Art bei einem Fehler des Energieversorgungsnetzes der zum Stator des Asynchrongenerators fließende Statorstrom in Abhängigkeit von Parametern des Asynchrongenerators aus dem gemessenen Rotorstrom berechnet.

Der Erfindung liegt die Erkenntnis zugrunde, dass der Asynchrongenerator im Grundsatz auch als Transformator mit einem vorgegebenen Übersetzungsverhältnis betrachtet werden kann, und dass damit zumindest bei einem Fehler des Energieversorgungsnetzes der Statorstrom mit Hilfe des Übersetzungsverhältnisses aus dem Rotorstrom berechnet werden kann. Mit Hilfe der Parameter des Asynchrongenerators kann dabei das Verhältnis des Statorstroms zum Rotorstrom und gegebenenfalls die Lage des jeweiligen Zeigers im betrachteten Bezugssystem in einfacher Weise berücksichtigt werden.

Wesentlich ist, dass die Messung des Rotorstroms auch bei einem Einbruch der Netzspannung des Energieversorgungsnetzes weitestgehend korrekt ist, so dass auch der aus dem gemessenen Rotorstrom berechnete Statorstrom im wesentlichen korrekt ist.

Dies bringt den Vorteil mit sich, dass nicht der ungenaue oder gar fehlerhafte gemessene Statorstrom verwendet werden muss, sondern dass mit Hilfe der Erfindung ein genauer, aus dem gemessenen Rotorstrom berechneter Statorstrom zur Verfügung steht. Die Steuerung und/oder Regelung der gesamten Schaltung kann somit auch bei einem Fehler im Energieversorgungsnetz mit im wesentlichen gleichbleibender Genauigkeit auf der Grundlage des berechneten Statorstroms fortgesetzt werden.

Bei einer vorteilhaften Ausgestaltung der Erfindung wird der zum Stator des Asynchrongenerators fließende Statorstrom nach der folgenden Gleichung berechnet:

$$\begin{bmatrix} i_{S\_a} \\ i_{S\_r} \end{bmatrix} = \frac{X_h * X_S}{R_S^2 + X_S^2} \begin{bmatrix} -1 & \dfrac{R_S}{X_S} \\ -\dfrac{R_S}{X_S} & -1 \end{bmatrix} * \begin{bmatrix} i_{R\_a} \\ i_{R\_r} + i_{\mu 0} \end{bmatrix}$$

mit den folgenden Parametern:

| | |
|---|---|
| $i_{S\_a}$ | Stator-Wirkstrom |
| $i_{S\_r}$ | Stator-Blindstrom |
| $i_{R\_a}$ | Rotor-Wirkstrom |
| $i_{R\_r}$ | Rotor-Blindstrom |
| $i_{\mu 0}$ | Magnetisierungsstrom |
| $R_S$ | Stator-Wirkwiderstand |
| $X_S$ | Stator-Blindwiderstand |
| $X_h$ | Blindwiderstand. |

Mit Hilfe dieser Gleichung kann der Statorstrom auf einfache Weise aus dem Rotorstrom berechnet werden.

Bei einer weiteren vorteilhaften Ausgestaltung der Erfindung wird der Statorstrom im fehlerfreien Betrieb des Energieversorgungsnetzes aus dem gemessenen Rotorstrom berechnet, es wird der gemessene Statorstrom und der berechnete Statorstrom verglichen, und es werden die Parameter der Asynchronmaschine in Abhängigkeit davon verändert. Auf diese Weise können die Parameter der Asynchronmaschine im fehlerfreien Betrieb des Energieversorgungsnetzes nach und nach optimiert werden, so dass im Falle eines Fehlers des Energieversorgungsnetzes der dann aus dem gemessenen Rotorstrom berechnete Statorstrom weitestgehend genau und korrekt ist.

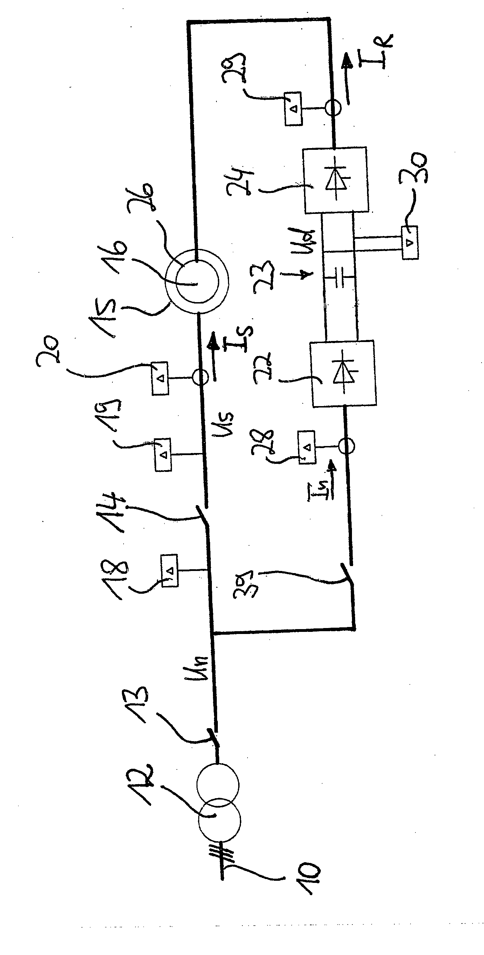

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Blockschaltbild eines Ausführungsbeispiels einer erfindungsgemäßen elektrischen Schaltung zur Erzeugung elektrischer Energie.

Ein dreiphasiges Energieversorgungsnetz 10 ist mit einem Transformator 12 und einem Schalter 13 verbunden, an die weiterhin ein Statorschalter 14 angeschlossen ist, der seinerseits mit dem Stator 15 eines Asynchrongenerators 16 verbunden ist. Bei dem Statorschalter 14 kann es sich um jegliche Art eines ansteuerbaren elektrischen bzw. elektronischen Schalters handeln, der in der Lage ist, den Strom bzw. die Spannung zwischen dem Transformator 12 und dem Stator 15 zu führen und zu unterbrechen. Insbesondere kann es sich bei dem Statorschalter 14 um ein elektrisches bzw. elektronisches Leistungshalbleiterbauteil handeln, das beispielsweise aus einem Thyristor oder einen IGBT (insulated gate bipolar transistor) oder dergleichen aufgebaut ist.

Zur Messung der Netzspannung Un ist auf der Netzseite des Statorschalters 14 ein Spannungssensor 18 vorgesehen. Zur Messung der Statorspannung Us ist auf der Statorseite des Statorschalters 14 ein weiterer Spannungssensor 19 vorgesehen. Auf dieser Statorseite ist des weiteren ein Stromsensor 20 vorhanden, der den über den Statorschalter 14 fließenden Statorstrom $I_S$ misst. Der Statorstrom $I_S$ setzt sich dabei aus einem Stator-Wirkstrom und einem Stator-Blindstrom zusammen.

An den Verbindungspunkt des Schalters 13 und des Statorschalters 14 ist ein netzseitiger Umrichter 22, insbesondere ein Pulswechselrichter, angeschlossen, der über einen zweipoligen Gleichstrom-Zwischenkreis 23 mit einem rotorseitigen Umrichter 24, insbesondere einem Pulswechselrichter, verbunden ist. Der rotorseitige Umrichter 24 ist weiterhin mit dem Rotor 26 des Asynchrongenerators 16 verbunden. Der netzseitige Umrichter 22 und der rotorseitige Umrichter 24 können beliebig und unterschiedlich aufgebaut sein, insbesondere kann es sich dabei um Schaltungen handeln, die eine Mehrzahl von Halbleiterbauelementen aufweisen, beispielsweise Dioden oder Transistoren oder dergleichen. Der Zwischenkreis 23 ist zur Speicherung einer Gleichspannung vorgesehen und weist insbesondere einen oder mehrere Kondensatoren auf. Weiterhin ist es möglich, dass der netzseitige Umrichter 22, der Zwischenkreis 23 und der rotorseitige Umrichter 24 als sogenannte Zwei- oder Mehr-Level-Anordnungen ausgebildet sind.

Zur Messung des über den netzseitigen Umrichter 22 fließenden Stroms In ist auf der Netzseite des netzseitigen Umrichters 22 ein Stromsensor 28 vorgesehen. Zur Messung des über den rotorseitigen Umrichter 24 fließenden Rotorstroms $I_R$ ist auf der Rotorseite des rotorseitigen Umrichters 24 ein weiterer Stromsensor 29 vorhanden. Der Rotorstrom $I_R$ setzt sich dabei aus einem Rotor-Wirkstrom und einem Rotor-Blindstrom zusammen.

Zwischen dem rotorseitigen Umrichter 24 und dem Zwischenkreis 23 ist ein Spannungssensor 30 vorgesehen, mit dem die Zwischenkreisspannung Ud gemessen werden kann. Zwischen den Transformators 12 und den netzseitigen Umrichter 22 ist ein Netzschalter 39 vorgesehen.

Die Meßsignale der Netzspannung Un, der Statorspannung Us, der Zwischenkreisspannung Ud, des über den netzseitigen Umrichter 22 fließenden Stroms In, des Statorstroms $I_S$ und des Rotorstroms $I_R$ sind einer von einem Steuergerät durchgeführten Steuerung/Regelung als Eingangssignale zugeführt. Diese Steuerung/Regelung erzeugt Ausgangssignale, mit denen der Statorschalter 14, der netzseitige Umrichter 22 und der rotorseitige Umrichter 24 sowie der Netzschalter 39 angesteuert werden.

Die Steuerung/Regelung des Steuergeräts beeinflusst den netzseitigen Umrichter 22 und den rotorseitigen Umrichter 24 unter anderem dahingehend, dass die Zwischenkreisspannung Ud möglichst einer vorgegebenen Nennspannung entspricht.

Bei der in der Figur dargestellten und vorstehend beschriebenen Schaltung handelt es sich um einen sogenannten doppelt gespeisten Asynchrongenerator 16 mit netzgekoppeltem Stator 15. Diese Schaltung kommt insbesondere in Energieerzeugungsanlagen zum Einsatz, beispielsweise in Windkraft- oder Wasserkraft- oder Gasturbinen-Energieerzeugungsanlagen.

Im Normalbetrieb dieser Schaltung sind der Statorschalter 14 und der Netzschalter 39 leitend geschaltet. Wird der Rotor 26 durch eine äußere Kraft, beispielsweise durch Wind oder Wasser oder Dampf oder dergleichen, in eine Drehbewegung versetzt, so wird im Stator 15 eine Spannung induziert, die über den Statorschalter 14 in das Energieversorgungsnetz 10 eingespeist wird. Die Anpassung, insbesondere die Synchronisierung der in den Stator 15 induzierten Spannung an die Netzspannung Un des Energieversorgungsnetzes 10 wird von der Steuerung/Regelung durch eine entsprechende Ansteuerung des netzseitigen Umrichters 22 und des rotorseitigen Umrichters 24 erreicht.

Zum Starten des Betriebs der Energieerzeugungsanlage wird der Zwischenkreis 23, also insbesondere der/die dortige/n Kondensator/en in nicht näher dargestellter Weise aufgeladen. Sobald eine erwünschte Spannung im Zwischenkreis 23 vorhanden ist, wird der Netzschalter 39 in seinen leitenden Zustand geschaltet. Der Statorschalter 14 bleibt geöffnet. Wenn der Rotor 26 sich dreht und im wesentlichen seine Nenndrehzahl erreicht hat, dann beginnt der rotorseitige Umrichter 24 damit, den Rotor 26 des Asynchrongenerators 16 zu magnetisieren, so dass eine Spannung vom Rotor 26 zum Stator 15 induziert wird. Von der Steuerung/Regelung werden die Statorspannung Us und die Netzspannung Un synchronisiert. Sobald dies erreicht ist, wird der Statorschalter 14 in seinen leitenden Zustand geschaltet und es fließt ein Strom in das Energieversorgungsnetz 10. Die Schaltung befindet sich nun im Normalbetrieb. Während beim Aufmagnetisieren des Asynchrongenerators 16 üblicherweise die Rotorströme geregelt werden, erfolgt im Normalbetrieb üblicherweise eine Regelung der Statorströme.

Bei einem im Normalbetrieb auftretenden Fehler im Energieversorgungsnetz 10, insbesondere bei einem Einbruch der Netzspannung Un, ist vorgesehen, dass die Steuerung/Regelung den netzseitigen Umrichter 22 und den rotorseitigen Umrichter 24 dahingehend beeinflusst, dass von der in der Figur gezeigten Schaltung weiterhin zumindest ein Wirkstrom in das Energieversorgungsnetz 10 eingespeist wird. Dies wird häufig auch als "fault ride through (FRT)"-Betrieb bezeichnet.

Wie im Normalbetrieb, so ist es auch im FRT-Betrieb erforderlich, dass das Steuergerät bzw. die Steuerung/Regelung den von dem Stromsensor 20 gemessenen Statorstrom $I_S$ verarbeitet. Insbesondere bei einem Einbruch der Netzspannung Un wird der Statorstrom $I_S$ jedoch sehr groß. Dies hat zur Folge, dass der zur Messung des Statorstroms $I_S$ vorgesehene Stromsensor 20, der üblicherweise als Stromwandler ausgebildet ist, in die Sättigung geht und der von dem Stromsensor 20 erzeugte Messwert nicht mehr korrekt ist. Bei einem Einbruch der Netzspannung Un wird deshalb der Statorstrom $I_S$ von der Steuerung/Regelung nicht mehr verwendet.

Statt dessen wird allgemein wie folgt vorgegangen:

Bei einem Fehler im Energieversorgungsnetz 10, insbesondere bei einem Einbruch der Netzspannung Un, wird, wie erläutert wurde, der Statorstrom $I_S$ sehr groß und erhält eine Gleichstromkomponente. Der als Stromsensor 20 für den Statorstrom $I_S$ üblicherweise verwendete Wechselspannungswandler geht damit in die Sättigung. Entsprechendes gilt aber nicht für den Rotorstrom $I_R$, da hier üblicherweise immer aktive Stromwandler eingesetzt werden.

Es wird daher im Fehlerfall der gemessene Rotorstrom $I_R$ in den Statorstrom $I_S$ umgerechnet, und zwar in Abhängigkeit von dem vorgegebenen Verhältnis des Statorstroms $I_S$ zum Rotorstrom $I_R$. Dieses vorgegebene Verhältnis ist dabei seinerseits abhängig von Parametern der Asynchronmaschine 16. Insgesamt bedeutet dies, dass der Statorstrom $I_S$ aus dem gemessenen Rotorstrom $I_R$ in Abhängigkeit von Parametern des Asynchrongenerators 16 berechnet wird.

Im Einzelnen wird der Statorstrom $I_S$ nach der folgenden Gleichung G berechnet:

$$\begin{bmatrix} i_{S\_a} \\ i_{S\_r} \end{bmatrix} = \frac{X_h * X_S}{R_S^2 + X_S^2} \begin{bmatrix} -1 & \dfrac{R_S}{X_S} \\ -\dfrac{R_S}{X_S} & -1 \end{bmatrix} * \begin{bmatrix} i_{R\_a} \\ i_{R\_r} + i_{\mu 0} \end{bmatrix}$$

Die in dieser Gleichung G enthaltenen Parameter haben dabei die folgenden Bedeutungen:

$i_{S\_a}$   Stator-Wirkstrom
$i_{S\_r}$   Stator-Blindstrom
$i_{R\_a}$   Rotor-Wirkstrom
$i_{R\_r}$   Rotor-Blindstrom
$i_{\mu 0}$   Magnetisierungsstrom

$R_S$      Stator-Wirkwiderstand

$X_S$      Stator-Blindwiderstand

$X_h$      Blindwiderstand der Hauptinduktivität.

Der Stator-Wirkstrom $i_{S\_a}$ und der Stator-Blindstrom $i_{S\_r}$ werden mittels der Gleichung G berechnet. Der Rotor-Wirkstrom $i_{R\_a}$ und der Rotor-Blindstrom $i_{R\_r}$ werden mit Hilfe des Stromsensors 29 gemessen. Der Magnetisierungsstrom $i_{\mu 0}$ wird vorab ermittelt, und zwar als eine von der Netzspannung Un abhängige Kennlinie.

Aufgrund der Messung der Netzspannung Un mit Hilfe des Spannungssensors 18 kann im Betrieb der in der Figur gezeigten Schaltung der Magnetisierungsstrom $i_{\mu 0}$ aus dieser Kennlinie entnommen werden.

Das Verhältnis $R_S/X_S$ kann vorab ermittelt werden. Hierzu kann die in der Figur gezeigte Schaltung mit einem Stator-Blindstrom $i_{S\_r}$ gleich Null, also $i_{S\_r}=0$, in einem Bereich höherer Leistung, vorzugsweise bei Nennleistung, betrieben werden. Aus der obigen Gleichung G kann dann das Verhältnis $R_S/X_S$ wie folgt aus den gemessenen Strömen berechnet werden:

$$R_S/X_S \ = \ - \ (i_{R\_r} \ + \ i_{\mu 0}) \ / \ i_{R\_a}.$$

Das Verhältnis $(X_h{}^*X_S)/(R_S{}^2+X_S{}^2) \approx X_h/X_S$ kann ebenfalls vorab ermittelt werden. Hierzu kann das ermittelte Verhältnis $R_S/X_S$ in die obige Gleichung G eingesetzt werden, und zwar dort in den Gleichungsteil für den Stator-Wirkstrom $i_{S\_a}$. Es ergibt sich dann:

$$X_h/X_S \ = \ - \ (i_{S\_a} \ * \ i_{R\_a}) \ / \ (i_{R\_a}{}^2 \ + \ (i_{R\_r} \ + \ i_{\mu 0})^2).$$

Im Betrieb der in der Figur gezeigten Schaltung, vorzugsweise in einem Betriebsbereich mit eher größeren Strömen, wird bei nicht-vorhandenem Fehler im Energieversorgungsnetz 10 einerseits der Statorstrom $I_S$ und der Rotorstrom $I_R$ gemessen. Andererseits werden bei diesem fehlerfreien Betrieb die Verhältnisse $R_S/X_S$ und $X_h/X_S$, wie vorstehend erläutert, ermittelt, so dass mit Hilfe des gemessenen Rotorstroms $I_R$ der Statorstrom $I_S$ nach der Gleichung G berechnet werden kann. Danach wird ein Vergleich des gemessenen Statorstroms $I_S$ und des über die Gleichung G ermittelten Statorstroms $I_S$ vorgenommen. Auf der Grundlage dieses Vergleichs können dann, sofern erforderlich, die Parameter der Gleichung G, insbesondere der Magnetisierungsstrom $i_{\mu 0}$ und die Verhältnisse $R_S/_S$ und $X_h/X_S$ verändert, insbesondere im Sinne einer Optimierung verbessert werden. Tritt nach dieser Optimierung ein Fehler im Energieversorgungsnetz 10 auf, so kann der Statorstrom $I_S$ mit den optimierten Parametern gemäß der Gleichung G berechnet werden, ohne dass hierbei ein wesentlicher Fehler auftreten würde.

Alternativ ist es möglich, anstelle der erläuterten Berechnung der Verhältnisse $R_S/X_S$ und $X_h/X_S$ von Startwerten für diese Verhältnisse auszugehen. Beispielsweise kann das Verhältnis $R_S/X_S$ zu Null und das Verhältnis $X_h/X_S$ zu Eins gewählt werden, also $R_S/X_S=0$ und $X_h/X_S=1$. Ebenfalls ist es möglich, die Startwerte aus den Datenblättern des Asynchrongenerators 16 herauszulesen oder abzuleiten. Ausgehend von derartigen Startwerten kann dann eine Optimierung entsprechend der vorstehend erläuterten Vorgehensweise vorgenommen werden.

**Patentansprüche**

1. Verfahren zum Betreiben einer elektrischen Schaltung zur Erzeugung elektrischer Energie, bei der ein Asynchrongenerator (16) einen Stator (15) und einen Rotor (26) aufweist, bei der der Asynchrongenerator (16) statorseitig mit einem Energieversorgungsnetz (10) gekoppelt ist, und bei dem der zum Rotor (26) des Asynchrongenerators (16) fließende Rotorstrom ($I_R$) gemessen wird, wobei bei einem Fehler des Energieversorgungsnetzes (10) der zum Stator (15) des Asynchrongenerators (16) fließende Statorstrom ($I_S$) in Abhängigkeit von Parametern des Asynchrongenerators (16) aus dem gemessenen Rotorstrom ($I_R$) berechnet wird, **dadurch gekennzeichnet, dass** der Statorstrom ($I_S$) im fehlerfreien Betrieb des Energieversorgungsnetzes (10) aus dem gemessenen Rotorstrom ($I_R$) nach der folgenden Gleichung berechnet wird:

$$\begin{bmatrix} i_{S\_a} \\ i_{S\_r} \end{bmatrix} = \frac{X_h * X_S}{R_S^2 + X_S^2} \begin{bmatrix} -1 & \dfrac{R_S}{X_S} \\ -\dfrac{R_S}{X_S} & -1 \end{bmatrix} * \begin{bmatrix} i_{R\_a} \\ i_{R\_r} + i_{\mu 0} \end{bmatrix}$$

mit den folgenden Parametern:

$i_{S\_a}$ Stator-Wirkstrom
$i_{S\_r}$ Stator-Blindstrom
$i_{R\_a}$ Rotor-Wirkstrom
$i_{R\_r}$ Rotor-Blindstrom
$i_{\mu 0}$ Magnetisierungsstrom
$R_S$ Stator-Wirkwiderstand
$X_S$ Stator-Blindwiderstand
$X_h$ Blindwiderstand

wobei der gemessene Statorstrom ($I_S$) und der berechnete Statorstrom ($I_S$) verglichen werden, und wobei die folgenden Parameter der Asynchronmaschine (16) in Abhängigkeit davon verändert werden, so dass die Parameter der Asynchronmaschine (16) im fehlerfreien Betrieb des Energieversorgungsnetzes nach und nach optimiert werden können:

ein Verhältnis $R_S/X_S$;
ein Verhältnis $X_h/X_S \approx (X_h * X_S)/(R_S^2 + X_S^2)$; und
der Magnetisierungsstrom ($i_{\mu 0}$);
wobei der Startwert für das Verhältnis $R_S/X_S$ aus einem Datenblatt der Asynchronmaschine (16) entnommen wird oder auf Null gesetzt wird, wobei der Startwert für das Verhältnis $X_h/X_S$ aus dem Datenblatt entnommen wird oder auf Eins gesetzt wird, und wobei der Startwert für den Magnetisierungsstrom ($i_{\mu 0}$) ermittelt wird aus einer Messung der Netzspannung (Un) unter Verwendung einer Kennlinie des Magnetisierungsstroms ($i_{\mu 0}$), welcher abhängig ist von der Netzspannung (Un).

2. Steuergerät für eine elektrische Schaltung zur Erzeugung elektrischer Energie, wobei die Schaltung einen Asynchrongenerator (16), einen Stator (15) und einen Rotor (26) aufweist, der Asynchrongenerator (16) statorseitig mit einem Energieversorgungsnetz (10) gekoppelt ist, und der zum Rotor (26) des Asynchrongenerators (16) fließende Rotorstrom ($I_R$) messbar ist, **dadurch gekennzeichnet, dass** das Steuergerät derart ausgebildet ist, dass bei einem Fehler des Energieversorgungsnetzes (10) der zum Stator (15) des Asynchrongenerators (16) fließende Statorstrom ($I_S$) berechnet wird gemäß dem Verfahren nach Anspruch 1.

3. Elektrische Schaltung zur Erzeugung elektrischer Energie, bei der ein Asynchrongenerator (16) einen Stator (15) und einen Rotor (26) aufweist, der Asynchrongenerator (16) statorseitig mit einem Energieversorgungsnetz (10) gekoppelt ist, und der zum Rotor (26) des Asynchrongenerators (16) fließende Rotorstrom ($I_R$) messbar ist, wobei die elektrische Schaltung eine Steuervorrichtung nach Anspruch 2 umfaßt.

## Claims

1. Method for operating an electric circuit for generating electric power, in which an asynchronous generator (16) comprises a stator (15) and a rotor (26), the asynchronous generator (16) being coupled on the stator side to a power supply grid (10), and in which the rotor current ($I_R$) flowing to the rotor (26) of the asynchronous generator (16) is measured, wherein in the case of a fault in the power supply grid (10), the stator current (Is) flowing to the stator (15) of the asynchronous generator (16) is calculated from the measured rotor current ($I_R$) as a function of parameters of the asynchronous generator (16), **characterized in that**
during fault-free operation of the power supply grid (10), the stator current (Is) is calculated from the measured rotor current ($I_R$) according to the following equation:

$$\begin{bmatrix} i_{S\_a} \\ i_{S\_r} \end{bmatrix} = \frac{X_h * X_S}{R_S^2 + X_S^2} \begin{bmatrix} -1 & \dfrac{R_S}{X_S} \\ -\dfrac{R_S}{X_S} & -1 \end{bmatrix} * \begin{bmatrix} i_{R\_a} \\ i_{R\_r} + i_{\mu 0} \end{bmatrix}$$

having the following parameters:

$i_{S\_a}$ stator active current
$i_{S\_r}$ stator reactive current
$i_{R\_a}$ rotor active current
$i_{R\_r}$ rotor reactive current
$i_{\mu 0}$ magnetizing current
$R_S$ stator active resistance
$X_S$ stator reactance
$X_h$ reactance

wherein the measured stator current (Is) and the calculated stator current (Is) are compared, and wherein the following parameters of the asynchronous machine (16) are changed as a function thereof so that the parameters of the asynchronous machine (16) can be optimised gradually during fault-free operation of the power supply grid:

a ratio $R_S/X_S$;
a ratio $X_h/X_S \approx (X_h*X_S)/(R_S^2+X_S^2)$; and
the magnetizing current $i_{\mu 0}$;
wherein the initial value for the ratio Rs/Xs is obtained from a datasheet of the asynchronous machine (16) or is set to zero, wherein the initial value for the ratio $X_h/X_S$ is obtained from said datasheet or is set to one, and wherein the initial value for the magnetizing current ($i_{\mu 0}$) is determined from a measurement of the mains voltage (Un) using a characteristic curve of the magnetizing current ($i_{\mu 0}$) which is dependent on the mains voltage (Un).

2. Control device for an electric circuit for generating electric power, wherein the circuit comprises an asynchronous generator (16), a stator (15) and a rotor (26), the asynchronous generator (16) being coupled on the stator side to a power supply grid (10), and the rotor current ($I_R$) flowing to the rotor (26) of the asynchronous generator (16) is measurable, **characterised in that** the control device is designed such that, in case of a fault in the power supply grid (10), the stator current (Is) flowing to the stator (15) of the asynchronous generator (16) is calculated using the method according to claim 1.

3. Electric circuit for generating electric power, in which an asynchronous generator (16) comprises a stator (15) and a rotor (26), the asynchronous generator (16) being coupled on the stator side to power supply grid (10), and the rotor current ($I_R$) flowing to the rotor (26) of the asynchronous generator (16) is measurable, wherein the electric circuit comprises a control device according to claim 2.

**Revendications**

1. Procédé pour faire fonctionner un circuit électrique destiné à produire de l'énergie électrique, dans lequel un générateur asynchrone (16) présente un stator (15) et un rotor (26), dans lequel le générateur asynchrone (16) est couplé, côté stator, à un réseau d'alimentation en énergie (10) et dans lequel le courant de rotor ($I_R$) s'écoulant vers le rotor (26) du générateur asynchrone (16) est mesuré, sachant qu'en cas de défaut du réseau d'alimentation en énergie (10) le courant de stator (Is) s'écoulant vers le stator (15) du générateur asynchrone (16) est calculé en fonction de paramètres du générateur asynchrone (16), à partir du courant de rotor ($I_R$) mesuré, **caractérisé en ce que** lors du fonctionnement sans défauts du réseau d'alimentation en énergie (10), le courant de stator (Is) est calculé à partir du courant de rotor (Is) mesuré, selon l'équation suivante :

$$\begin{bmatrix} i_{S\_a} \\ i_{S\_r} \end{bmatrix} = \frac{X_h * X_S}{R_S^2 + X_S^2} \begin{bmatrix} -1 & \dfrac{R_S}{X_S} \\ -\dfrac{R_S}{X_S} & -1 \end{bmatrix} * \begin{bmatrix} i_{R\_a} \\ i_{R\_r} + i_{\mu 0} \end{bmatrix}$$

avec les paramètres suivants :

$i_{S\_a}$ courant actif de stator
$i_{S\_r}$ courant réactif de stator
$i_{R\_a}$ courant actif de rotor
$i_{R\_r}$ courant réactif de rotor
$i_{\mu 0}$ courant d'aimantation
$R_S$ résistance active de stator
$X_S$ réactance de stator
$X_h$ réactance

sachant que le courant de stator ($I_S$) mesuré et le courant de stator (Is) calculé sont comparés, et sachant que les paramètres suivants de la machine asynchrone (16) sont modifiés en fonction de cela, de sorte que les paramètres de la machine asynchrone (16) peuvent être optimisés peu à peu lors du fonctionnement exempt de défauts du réseau d'alimentation en énergie :
un rapport $R_S/X_S$ ;
un rapport $X_h/X_S \approx (X_h * X_S) / (R_S^2 + X_S^2)$ ; et
le courant d'aimantation ($i_{\mu 0}$) ;
sachant que la valeur de démarrage pour le rapport Rs/Xs est extraite d'une fiche signalétique de la machine asynchrone (16) ou est mise à zéro, sachant que la valeur de démarrage pour le rapport $S_h/X_S$ est extraite de la fiche signalétique ou est positionnée sur un, et sachant que la valeur de démarrage pour le courant d'aimantation ($i_{\mu 0}$) est déterminée à partir d'une mesure de la tension du réseau (Un), en utilisant une caractéristique du courant d'aimantation ($i_{\mu 0}$), qui est fonction de la tension du réseau (Un).

**2.** Appareil de commande pour un circuit électrique destiné à produire de l'énergie électrique, sachant que le circuit présente un générateur asynchrone (16), un stator (15) et un rotor (26), que le générateur asynchrone (16) est couplé, côté stator, à un réseau d'alimentation en énergie (10), et que le courant de rotor ($I_R$) s'écoulant vers le rotor (26) du générateur asynchrone (16) peut être mesuré, **caractérisé en ce que** l'appareil de commande est agencé de manière telle qu'en cas de défaut du réseau d'alimentation en énergie (10) le courant de stator (Is) s'écoulant vers le stator (15) du générateur asynchrone (16) soit calculé conformément au procédé selon la revendication 1.

**3.** Circuit électrique destiné à produire de l'énergie électrique, dans lequel un générateur asynchrone (16) présente un stator (15) et un rotor (26), le générateur asynchrone (16) est couplé, côté stator, à un réseau d'alimentation en énergie (10), et le courant de rotor ($I_R$) s'écoulant vers le rotor (26) du générateur asynchrone (16) peut être mesuré, sachant que le circuit électrique comprend un dispositif de commande selon la revendication 2.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007014728 A1
- US 20090206606 A1